# EUROPEAN PATENT APPLICATION

(11) **EP 2 827 438 A1**
(43) Date of publication of application: **21.01.2015**
(21) Application number: 13176896.2
(22) Date of filing: 17.07.2013
(51) Int. Cl.: H01M 12/08

(54) **Non-aqueous electrolyte for a metal-air battery comprising a dinitrile solvent and metal-air battery comprising said electrolyte**

(71) Applicant: Zentrum für Sonnenenergie- und Wasserstoff-Forschung Baden-Württemberg Gemeinnützige Stiftung, 70565 Stuttgart (DE)
(72) Inventor: Marinaro, Mario, Dr., 89077 Ulm (DE); Wohlfahrt-Mehrens, Margret, Dr., 89257 Illertissen (DE); Jörissen, Ludwig, Dr., 89231 Neu-Ulm (DE)
(74) Representative: Ter Meer Steinmeister & Partner

(57) **Abstract**

A non-aqueous electrolyte suitable for a metal-air battery is presented, comprising a dinitrile solvent and an alkali metal salt.

The non-aqueous electrolyte of the invention shows stability during the oxygen reduction reaction as well as during oxygen evolution reaction. High degree of reversibility and cyclability is obtained with such electrolyte.

Further provided is a metal-air-battery comprising
a) a metal anode,
b) an air cathode, and
c) a non-aqueous electrolyte according to the invention.

## Description

### Technical field

This invention relates to non-aqueous electrolytes for metal-air batteries. More specifically the present invention is related to the use of a non-aqueous electrolyte solution comprised of at least a dinitrile-based solvent and an alkali metal salt that assure ionic conductivity between the electrodes of the electrochemical cell. The invention also relates to metal-air batteries using said non-aqueous electrolytes.

### Background and related art

The aprotic electrolyte rechargeable lithium-air batteries offer one of the highest specific energies among electrochemical energy storage devices. Lithium-air batteries have indeed the potential to overtake the battery technology in use today. Increasing efforts are therefore focused on the development of such kind of battery technology.

Typically, lithium-air batteries consist in an air cathode, a lithium metal anode, a separator and an electrolyte solution. The possible reactions that take place during the charge and the discharge process are listed below:

### Discharge

O₂ + Li⁺ + e⁻ → LiO₂
2LiO₂ → Li₂O₂ + O₂
LiO₂ + Li⁺ + e⁻ → Li₂O₂
Li₂O₂ + 2Li⁺ +2 e⁻ → 2Li₂O

### Charge

LiO₂ → O₂ + Li⁺ + e⁻
Li₂O₂ → O₂ + 2Li⁺ + 2 e⁻
Li₂O → ½O₂ + 2Li⁺ + 2e⁻

The major drawbacks affecting the performance of today lithium-air batteries can be summarized in five critical points: 1) oxygen solubility, 2) stability of the lithium anode, 3) lithium oxide and lithium peroxide dissolution, 4) catalyst development for rechargeability and 5) stability of the electrolyte solution during the oxygen reduction reaction and oxygen evolution reaction.

Rechargeability is the most difficult obstacle to overcome when a renewable energy storage system device is realized. In this contest in a typical lithium-air battery the oxidation of the reduction products is thermodynamically unfavourable and suffers from poor kinetics.

The first attempt of a lithium-air battery was developed using a lithium metal anode, a porous carbon cathode and a gel-polymer electrolyte¹. Without the use of any catalysts the oxidation takes place near 4 V vs. Li⁺/Li, giving rise to a large hysteresis. Such hysteresis was reduced by employing a cobalt phtalocyanine-based oxidation catalyst, which also improved the charge/discharge efficiency. More recently manganese oxide (MnO₂) has been employed as catalyst even if the charge voltage is almost unaffected by the presence of this compound².

In the regard to the electrolyte, many attempts were done by Read and co-workers³ trying to adapt common non-aqueous electrolytes for lithium-ion batteries in lithium-air cells. The main discharge product of a lithium-air battery has been identified as Li₂O₂ through Raman spectroscopy⁴. Unfortunately lithium peroxide is poorly soluble in carbonates-based electrolytes. Furthermore recent studies have shown that carbonates-based electrolytes are not stable against the oxygen reduction products formed during the discharge of a typical lithium-air battery⁵. Much of the evidence come from Fourier transform infrared (FT-IR) and Raman spectroscopy data indicating that the main discharge product is not lithium-peroxide but various carbonate species. Additionally in-situ differential electrochemical mass spectroscopy revealed that during the charging process CO₂ is evolved rather than O₂, which is a clear evidence of oxidative decomposition of lithium carbonates and alkyl carbonates. Therefore a key-factor for future development of lithium-air batteries is represented by the choice of a stable solvent/electrolyte system with respect to the generated discharge products.

In this regard ethers have attracted much attention as potential solvent of choice for lithium-air batteries. Unfortunately experimental data provided by Bruce and co-workers lead to the conclusion that ether based electrolytes are not suitable for lithium-air cells⁶. The identification of a solvent resistant to be attacked by reduced oxygen species remains a major challenge.

Further studies⁷ have been conducted to evaluate the stability of N,N-dialkylamides , such as dimethylformamide and acetamide, and lactams, such as N-methylpyrrolidone, as solvent for electrolyte systems for lithium-air batteries. Unfortunately preliminary results have shown that also such chemical functionalities are not stable towards the oxygen reduction products that form during the discharge of a typical lithium-air battery. Indeed decomposition products coming from the solvent have been found for all the above mentioned chemicals.

WO 2007/062220 A2 describes a non-aqueous alkali metal/oxygen battery cell comprising a protective anode, a protective membrane architecture, a cathode compartment comprising an oxygen electrode, a non-aqueous electrolyte and molecular oxygen, wherein the non-aqueous electrolyte solvent may include nitriles, amides, amines, organosulfur solvents or organophosphorous solvents.

### Objects of the invention

In view of the above, it can be seen that it is desirable to have a novel non-aqueous electrolyte system that maintains integrity and allows repeated charge/discharge cycles of a metal-air battery, typically a lithium-air cell. Further, it is desirable to provide an improved metal-air battery comprising such a non-aqueous electrolyte.

It is therefore one object of the present invention to provide a non-aqueous electrolyte solution suitable for metal-air batteries, in particular lithium-air batteries.

Another object of the invention is to provide a stable electrolyte system with respect to anode, cathode and separator materials usually used in metal- and lithium-air batteries.

Additionally the present invention wants to provide a non-aqueous electrolyte that is resistant to the oxygen reduction products, such as lithium peroxide and lithium oxide, that form during the discharge process of a typical primary or secondary metal- and lithium-air battery.

The electrolyte system presented in this invention is thought to be used in primary and secondary lithium-air and metal-air cells.

### Summary of the invention

According to the present invention, the above objects are achieved by a non-aqueous electrolyte according to claim 1 as well as a metal-air battery according to claim 6. Advantageous embodiments of the present invention are indicated in subclaims 2-4 and 7-11.

Accordingly, the present invention provides a non-aqueous electrolyte for a metal-air battery comprising a dinitrile solvent and an alkali metal salt.

Further, the subject-matter of the present invention relates to a metal-air battery comprising
a) a metal anode,
b) an air cathode, and
c) a non-aqueous electrolyte according to the invention as described above.

The non-aqueous electrolyte of the invention shows stability during the oxygen reduction reaction as well as during oxygen evolution reaction. With such an electrolyte, a high degree of reversibility and cyclability is obtained.

### Brief description of the drawings

**FIG. 1** shows the cyclic voltammograms of the tested non-aqueous electrolyte system collected at a sweep rate of 100 mV s⁻¹ as described in Example 4. The dotted voltammogram refers to the Argon background whereas the continuous trace refers to the cyclic voltammogram obtained after oxygen was bubbled for 30 minutes in the electrolyte solution.
**FIG. 2A** and **FIG. 2B** depict graphs illustrating several cyclic voltammograms collected at increased sweep rate, as described in Example 5.
**FIG. 3** illustrates a graph indicating the linear relationship between the I_{pc} and the square root of the sweep rate, as described in Example 6.
**FIG. 4** shows the full cyclability of a typical electrochemical cell comprised of a glass carbon working electrode, platinum foil counter electrode, lithium foil reference electrode and the electrolyte solution LiTFSI 0.1 M in adiponitrile, as described in Example 7.
**FIG. 5** illustrates a galvanostatic curve as obtained in Example 8.
**FIG. 6** shows a comparison of X-ray diffraction patterns as obtained in Example 9.

In the figures, the following abbreviations are used:
ADP: Adiponitrile
WE: Working Electrode
CE: Counter Electrode
RE: Reference Electrode

### Detailed description of the invention

The non-aqueous electrolyte of the present invention is based on a dinitrile solvent and an alkali metal salt. In particular, the dinitrile is represented by the general formula (1) 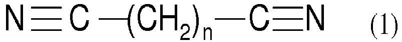 wherein n is an integer from 1 to 6, preferably 2 to 5, more preferably 3 or 4, and most preferably 4 (adiponitrile). The physical/chemical properties of adiponitrile are listed in Table 1.

**Table 1**

| | |
|---|---|
| Boiling point (°C) | 295 |
| Freezing point (°C) | 2 |
| Viscosity at 25°C (cP) | 1,66 |
| Dielectric constant (ε at 25°C) | 30 |
| Vapour Pressure (Pascal at 20°C) | 0,3 |

So far, the use of organic solvents based on the nitrile group (-CN) has been mainly limited to the simplest nitrile (acetonitrile). Unfortunately simple nitriles-based lithium conducting electrolytes are affected by poor anodic stability, limited at below 4 V vs. Li⁺/Li. Additionally, acetonitrile shows poor stability towards the lithium anode.

On the other hand dinitriles, adiponitrile and glutaronitrile for instance, exhibit an electrochemical stability window of about 6 V vs. Li⁺/Li. In addition to the high electrochemical stability, dinitriles show good thermal (high boiling point and flash point) and chemical/physical properties (high dielectric constant, low viscosity and low vapour pressure).

The alkali metal salt is preferably a lithium salt. More preferably, the lithium salt is selected from the group consisting of LiPF₆, LiBF₄, LiAsF₆, LiClO₄, LiSO₃CF₃, LiN(CF₃SO₂)₂, LiN(C₂F₅SO₂)₂, LiB(C₂O₄)₂, and LiPF₃(C₂F₅)₃, preferably selected from LiN(CF₃SO₂)₂ and LiBF₄, most preferably is LiN(CF₃SO₂)₂.

The preferred lithium salts LiN(CF₃SO₂)₂, i.e. lithium bis(trifluoromethanesulfonyl)imide (LiTFSI), and LiBF₄ have the chemical structures reported below:

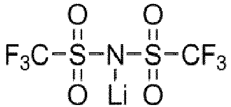

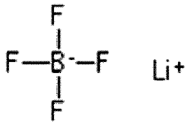

In a metal-air battery according to the invention, the metal anode may also comprise a metal intercalation compound.

Preferably, the metal-air battery is a lithium-air battery comprising a lithium metal anode as the metal anode.

The air cathode may preferably comprise porous carbon.

Further, it is preferred that the air cathode comprises a catalyst material to improve the cathode performance, wherein the catalyst material is preferably a metal catalyst material comprising manganese, cobalt, ruthenium, platinum, silver or mixtures thereof.

### Examples

The benefits of the present invention will be evident from the examples reported below, which are intended to be only representative and not limiting.

### Example 1

Adiponitrile has been dried over molecular sieve (4 Å) and stored in an Argon filled glove-box where the oxygen and water content have been kept below 0.1 ppm. The water content in the solvent after the drying process has been determined through coulometric Karl-Fischer titration. The water content was always below 10 ppm.

The non-aqueous electrolyte has been prepared in an Argon filled glove box by dissolving 0.1 mol of the alkali metal salt (LiTFSI) in 1 litre of solvent. Depending on the chemical nature of the salt, heat has been applied in order to facilitate the fully dissolution.

### Example 2

The viscosity and the density of the non-aqueous electrolyte system prepared as described in **Example 1** have been determined in the temperature range 0≤ T(°C )≤ 40. The obtained values are given in Table 2. The viscosity and the density have been measured using a SVM 3000 Stabinger Viscometer by Anton Paar.

**Table 2**

| Temp. | Dynamic viscosity | Kinematic viscosity | Density |
|---|---|---|---|
| [°C] | [mPas] | [mm²/s] | [g/cm³] |
| 0 °C | 24,6 | 24,8 | 0,9923 |
| 10 °C | 11,1 | 11,2 | 0,9849 |
| 20 °C | 7,8 | 8,0 | 0,9773 |
| 25 °C | 6,7 | 6,9 | 0,9735 |
| 30 °C | 5,9 | 6,1 | 0,9697 |
| 40 °C | 4,6 | 4,8 | 0,9623 |

The obtained results show that reasonable values of viscosity are achieved in the whole temperature range. Another aspect is that typical electrolytes for lithium-ion or lithium-air batteries often show a dynamic viscosity, at 25°C, comprised between 2 and 13 mPas.

### Example 3

The conductivity of the electrolyte solution prepared following the procedure reported in the **Example 1** has been determined as function of the temperature. Starting from 25°C the temperature was first increased and then decreased down to 0°C. The conductivity experiments were carried out in an Argon filled glove-box where the oxygen and water content were below 0.1 ppm. The obtained results are given in Table 3. The conductivity has been determined using a microcell HC by rhd-instruments apparatus.

**Table 3**

| Temp. | Conductivity |
|---|---|
| [°C] | [mS/cm] |
| 0 °C | 0,343 |
| 10 °C | 0,494 |
| 20 °C | 0,62 |
| 25 °C | 0,741 |
| 30 °C | 0,848 |
| 40 °C | 1,05 |

### Example 4

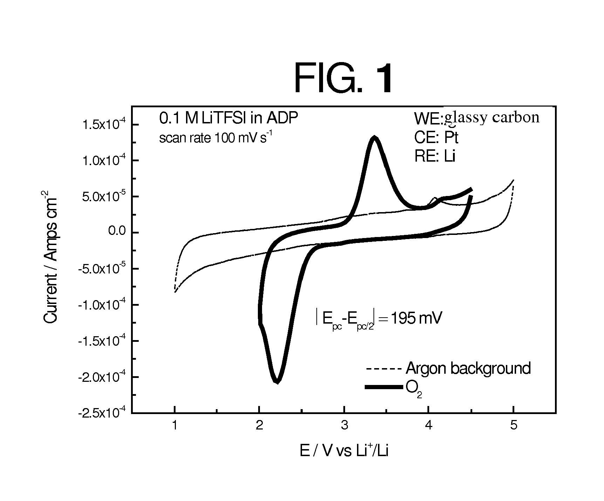

Cyclic voltammetry was used to investigate the electrochemical properties of the non-aqueous electrolyte solution LiTFSI 0.1 M in Adiponitrile prepared as described in **Example 1.** The cyclic voltammograms were collected using an electrochemical cell in which glassy carbon (3 mm in diameter) acted as the working electrode, platinum as the counter electrode and metallic lithium as the reference electrode. The cyclic voltammograms were collected with a sweep rate of 100 mV s⁻¹. **FIG.1** depicts a graph indicating two separate cyclic voltammograms overlaid. The dotted cyclic voltammogram refers to the Argon background collected in the potential window of 1-5 V vs. Li⁺/Li. The electrolyte solution of the present invention appears to be stable in the investigated potential window. Oxygen was subsequently bubbled in the electrolyte for 30 minutes in order to have an oxygen-saturated environment. The cyclic voltammogram (FIG. 1 continuous trace) collected at a sweep rate of 100 mV s⁻¹ and in the potential window of 2-4.5 V vs. Li⁺/Li shows a broad cathodic peak with the maximum centred at E= 2.25 V vs. lithium reference. The cathodic peak and half-peak potential (|E_{pc} - E_{pc/2}|) are separated by 195mV indicating a multi-electrons reduction reaction. Furthermore it was found that the ratio Qₐ/Q_{c}, determined from the area under the oxidation (Iₚₐ) and reduction (I_{pc}) peaks is close to the unity. This finding suggests that the electrochemical reactions involved are reversible and hence the electrolyte of the present invention can be successfully employed as electrolyte of choice for lithium-air batteries.

### Example 5

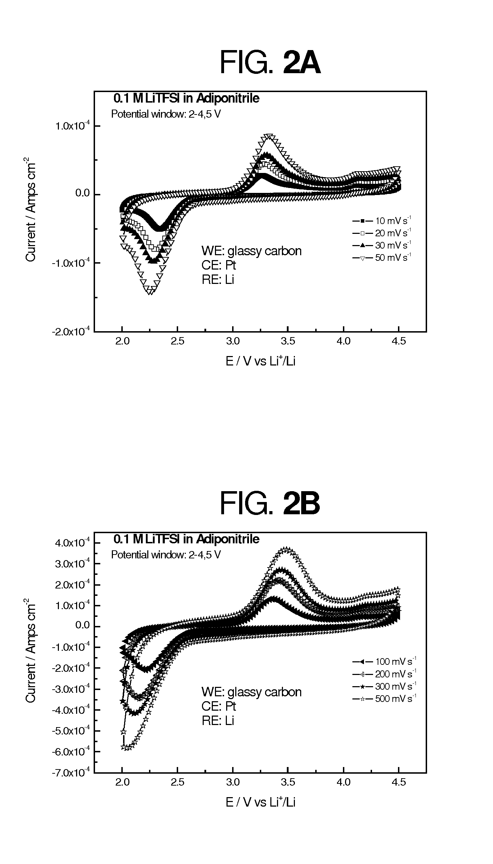

The non-aqueous electrolyte of **Example 1** was subject to further tests. **FIG. 2A** and **FIG. 2B** depict graphs showing the anodic and cathodic peak potential variations with the sweep rate. The experiment was carried out using an electrochemical cell with a glassy carbon working electrode, platinum foil as counter electrode and lithium foil as the reference electrode. The increasing of the sweep rate reflects in the voltammograms a shift of the cathodic and anodic peaks towards more negative and more positive potentials, respectively. Regardless to the sweep rate and hence for all the cyclic voltammograms, the ratio Qₐ/Q_{c} has been found close to the unity suggesting a reversible electrochemical reaction.

### Example 6

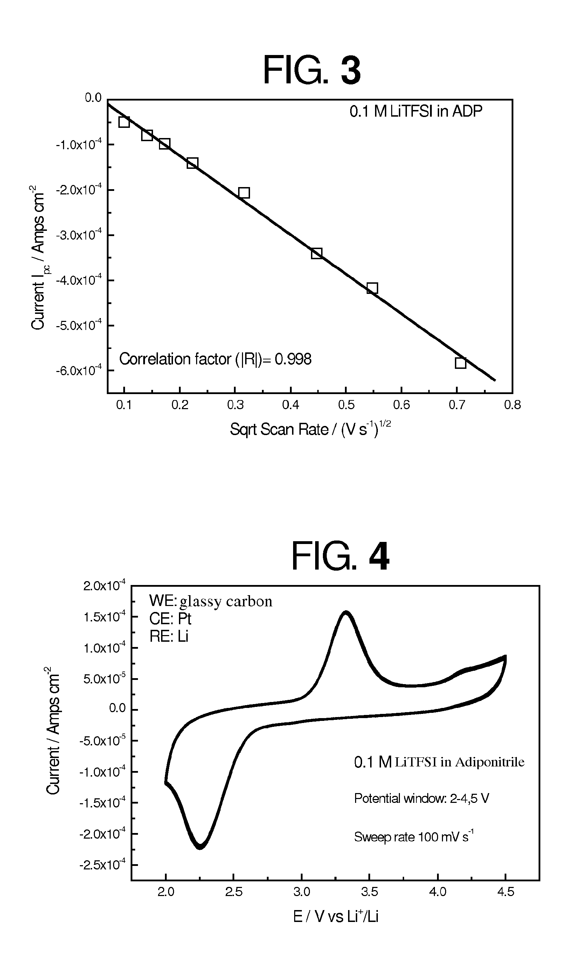

The obtained experimental data given in **Example 5** were used to compute a typical plot, shown in **FIG. 3****,** which illustrates the relationship between the cathodic peak current (I_{pc}) and the square root of the sweep rate. It can be seen that there is an obvious linear relationship among the experimental data, suggesting a diffusion controlled electrochemical process. Indeed, the computed linear fit shows a nice correlation coefficient (|R|) of 0.998.

### Example 7

The cyclability of the non-aqueous electrolyte of **Example 1** was investigated by cyclic voltammetry. **FIG. 4** depicts a graph indicating the cyclability of the non-aqueous electrolyte solution LiTFSI 0.1 M in Adiponitrile obtained utilizing an electrochemical cell where glassy carbon acted as the working electrode, platinum as the counter electrode and metallic lithium as the reference. Before running the experiment oxygen was bubbled in the electrolyte solution in order to have an oxygen saturated environment. The three overlapped cyclic voltammograms show that in the investigated potential window of 2-4.5 V vs. Li⁺/Li, the electrolyte under investigation provides full stability and rechargeability. Furthermore the ratio Qₐ/Q_{c}, determined from the area under the oxidation (Iₚₐ) and reduction (I_{pc}) peaks is close to the unity indicating a high degree of reversibility of the electrochemical reaction.

### Example 8

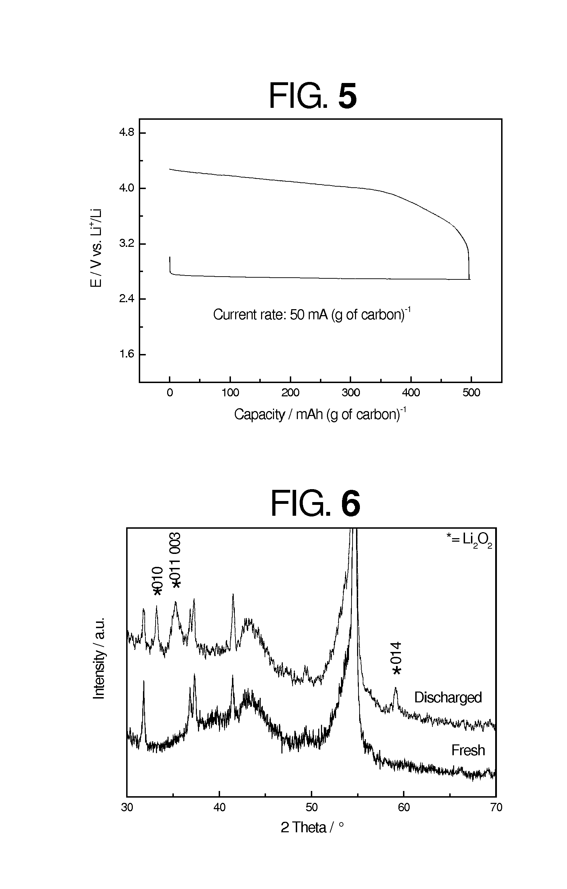

The non-aqueous aprotic electrolyte based on Adiponitrile of Example 1 has been tested in full Li-O2 electrochemical cells. Each typical cell consisted of a lithium anode, a separator, a carbon-based air cathode, and the electrolyte solution of the invention. FIG. 5 illustrates a typical galvanostatic curve collected with a current density of 50 mA (g of carbon)-1 and with capacity limitation of 500 mAh (g of carbon)-1. The galvanostatic plot features a flat discharge plateau consistent with the reduction of oxygen. Charging the cell translates into an increase of the cell voltage that approaches the end of the charge slightly above 4 V vs. Li.

### Example 9

The solid products formed upon discharge of typical electrochemical cells described in the Example 8, have been investigated by means of X-Ray diffraction. FIG. 6 shows a comparison between the X-Ray diffraction patterns of a pristine and a discharged electrode. The diffractogram clearly shows that the discharge leads to the formation of crystalline Li2O2 as desired products, whereas no other crystalline phases can be detected.

### References

¹ Abraham, K. M.; Jiang, Z. J. Electrochem. Soc 1996, 143, 1-5.
² Débart, A.; Paterson, Allan J.; Bao, J.; Bruce, Peter G. Angewandte Chemie International Edition 2008, 47, 4521-4524.
³ Read, J. Journal of The Electrochemical Society 2002, 149, A1190-A1195.
⁴ Linden, D.; Reddy, T. Handbook of Batteries; Third ed.; McGraw-Hill, 2001.
⁵ Freunberger, S. A.; Chen, Y.; Peng, Z.; Griffin, J. M.; Hardwick, L. J.; Barde, F.; Novák, P.; Bruce, P. J. Am. Chem. Soc. 2011, 133, 8040- 8047.
⁶ S. A. Freunberger, Y. Chen, N. E. Drewett, L. J. Hardwick, F. Bardé, P. G. Bruce Angew. Chem. Int. Ed. 2011, 50, 8609 -8613
⁷ Y. Chen, S. A. Freunberger, Z. Peng, F. Bardé, P. G. Bruce J. Am. Chem. Soc. 2012, 134, 7952-7957

## Claims

1. A non-aqueous electrolyte for a metal-air battery comprising a dinitrile solvent and an alkali metal salt.

2. The electrolyte according to claim 1, wherein the dinitrile is represented by the general formula (1) 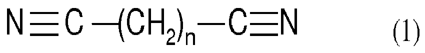 wherein n is an integer from 1 to 6, preferably 2 to 5, more preferably 3 or 4, and most preferably 4.

3. The electrolyte according to claim 1 and/or 2, wherein the alkali metal salt is a lithium salt.

4. The electrolyte according to claim 3, wherein the lithium salt is selected from the group consisting of LiPF₆, LiBF₄, LiAsF₆, LiClO₄, LiSO₃CF₃, LiN(CF₃SO₂)₂, LiN(C₂F₅SO₂)₂, LiB(C₂O₄)₂, and LiPF₃(C₂F₅)₃, preferably selected from LiN(CF₃SO₂)₂ and LiBF₄, most preferably is LiN(CF₃SO₂)₂.

5. The electrolyte according to any of claims 1-4, wherein the dinitrile is adiponitrile and the lithium salt is LiN(CF₃SO₂)₂.

6. A metal-air battery comprising
a) a metal anode,
b) an air cathode, and
c) a non-aqueous electrolyte according to any of claims 1-5.

7. The battery according to claim 6, wherein the metal anode comprises a metal intercalation compound.

8. The battery according to claim 6 and/or 7, wherein the metal-air battery is a lithium-air battery comprising a lithium metal anode as the metal anode.

9. The battery according to any of claims 6-8, wherein the air cathode comprises porous carbon.

10. The battery according to any of claims 6-9, wherein the air cathode comprises a catalyst material to improve cathode performance.

11. The battery according to claim 10, wherein the catalyst material is a metal catalyst material comprising manganese, cobalt, ruthenium, platinum, silver or mixtures thereof.
